# EUROPEAN PATENT SPECIFICATION

(11) **EP 1 851 260 B1**
(45) Date of publication and mention of the grant of the patent: **28.01.2009**
(21) Application number: 06735121.3
(22) Date of filing: 14.02.2006
(51) Int. Cl.: C08G 18/10, C09D 5/00

(54) **BLUSH-RESISTANT MARINE GEL COAT COMPOSITION**
VERFÄRBUNGSBESTÄNDIGE MARINE GEL-BESCHICHTUNGSZUSAMMENSETZUNG
COMPOSITION DE REVETEMENT MARIN A BASE DE GEL RESISTANTE AU VOILAGE

(30) Priority: 18.02.2005 US 61768
(43) Date of publication of application: 07.11.2007
(73) Proprietor: Valspar Sourcing, Inc., Minneapolis, MN 55415 (US)
(72) Inventor: PULMAN, Leonard, J., Palos Verdes Estates, California 90274 (US); GREGORY, Eric, R., Lakewood, California 90712 (US); ASHAI, Ehtisham, A., Carson, California 90746 (US); ROBERTSON, Brian A., Long Saulte, Ontario KOC 1PO, Quebec, Canada (US); PACHHA, Ranjit R., Cornwall, Canada (US)
(74) Representative: Vossius & Partner
(86) International application number: PCT/US2006/005310
(87) International publication number: WO 2006/091446

(56) References cited:
- EP-A- 0 854 157
- EP-A- 1 520 866

## Description

This invention relates to marine gel coat compositions.

Coated, molded articles, often fiber-reinforced, typically are made by spreading a gel coat composition over the surface of a mold having a surface corresponding to the article in negative relief. After cure, the gel coat composition, becomes the outermost layer of the molded article and will become exposed to the environment. The gel coat composition is spread across the mold surface by any one of a number of techniques (e.g., brushing, hand lay-up, or spraying) and usually as a relatively thick layer, e.g., up to about a 0.8 mm thick wet coating. This can help maximize weather and wear resistance, and if the molded article is fiber-reinforced, can help mask the fiber reinforcement pattern which may show through the gel coat due to inherent resin shrinkage that occurs around the fibers during cure. After the gel coat composition is applied to the mold surface, it is at least partially cured. A strengthening plastic support, optionally fiber-reinforced, is then applied behind the partially or fully cured gel coat composition using any one of a number of techniques (e.g., by brushing, hand lay-up, or spraying for open mold processes, or by casting for closed mold processes), and the resulting laminate structure is cured and demolded. Curing can be promoted through the use of free radical polymerization initiators.

A gel coat is a prepromoted resin, typically a polyester, and may be clear or colored. Clear gel coat compositions typically do not contain pigments or fillers. Colored gel coat compositions typically contain both pigments and extender fillers (e.g., mica, talc, aluminum trihydrate, barium sulfate, and the like).

In addition to imparting weather and wear resistance to the molded article, the gel coat composition also imparts cosmetic benefits. In marine applications, a high initial gloss, extended gloss retention.and uniform color are very desirable or necessary properties. Present-day marine gel coat compositions may exhibit blushing (development of uneven coloration) following extended water exposure, especially when used on large, non-trailerable watercraft which may be immersed in water for extended periods of time.

Blushing generally has not been a problem in applications such as automobile parts, shower stalls, bathtub enclosures and appliances, or in watercraft applications involving trailerable watercraft which typically do not undergo long term water immersion. However, for large watercraft that may be immersed for long periods of time (e.g., for a week or more, month or more or even longer), blushing has been a problem and various measures have been undertaken to prevent it. Measures that have been used include applying an initial clear gel coat composition to the watercraft mold surface followed by a pigmented and filled gel coat composition applied behind the clear coat, or applying a pigmented and filled gel coat composition to the watercraft mold surface and coating the finished demolded watercraft part (e.g., a hull) with an exterior automotive paint. Both these measures require extra time and materials, and introduce an additional required interface in the finished watercraft part. The present invention provides, in one aspect, a method for watercraft manufacture that can overcome these deficiencies, and can provide a blush-resistant gel coat that does not require such extra time and materials or such an additional required interface.

The present invention provides, in another aspect, a method for watercraft manufacture comprising:
a) applying to a watercraft mold surface a colored gel coat composition comprising an unsaturated polyester resin, reactive diluent, and sufficient pigment to provide an opaque cured coating, the composition being sufficiently free of extender filler so that the cured coating will not exhibit blushing after 6 hours immersion in 66° C water,
b) at least partially curing the gel coat composition,
c) forming a strengthening plastic support behind the partially or fully cured gel coat composition,
d) curing the strengthening plastic support, and
e) demolding the resulting cured laminate.

The invention provides, in another aspect, a colored gel coat composition comprising an unsaturated polyester resin, reactive diluent, thixotropic agent, promoter, inhibitor and sufficient pigment to provide an opaque cured coating, the composition being sufficiently free of extender filler so that the cured coating will not exhibit blushing after 6 hours immersion in 66° C water.

The disclosed method and composition can be used to manufacture large watercraft while using fewer materials and fewer steps than might otherwise be required.

Fig. 1 is a schematic perspective view of a yacht.

Fig. 2 is a cross-sectional schematic representation of a two-layer laminate made from the disclosed gel coat composition and a strengthening plastic support.

Like reference symbols in the various drawings indicate like elements. The elements in the drawing are not to scale.

The phrase "opaque cured coating" refers to a coating that when applied at a desired wet thickness (typically from about 0.05 mm to about 0.8 mm) non a LENETA Opacity-Display Chart Form 9A and cured has sufficient hiding power so that the underlying chart patterns can not be discerned by a typical observer under normal indoor illumination.

The term "blushing" refers to a cured coating or laminate whose normally visible exterior surface exhibits, after extended immersion in water, a change in coloration (e.g., as a decrease in saturation, change in hue or decrease in lightness) discernible by a typical observer under normal indoor illumination.

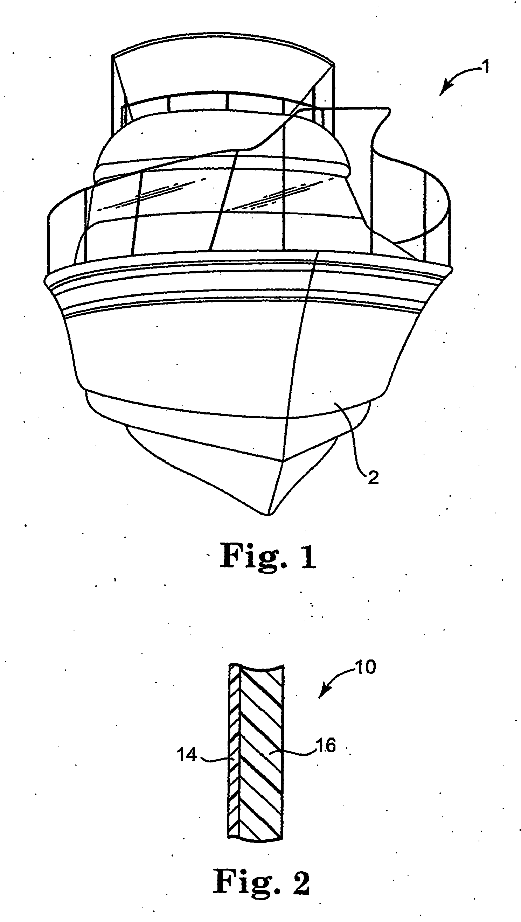

Referring to Fig. 1, yacht 1 has a molded hull 2 made from a two-layer laminate shown in cross-section in Fig. 2. Laminate 10 in Fig. 2 has an outer cured opaque gel coat layer 14 and an inner strengthening plastic support 16. Those skilled in the art will appreciate that laminate 10 may if desired include additional layers behind gel coat layer 14, such as a layer or layers (not shown in Fig. 2) between gel coat layer 14 and strengthening plastic support 16, and that gel coat layer 14 or strengthening plastic support 16 may themselves be formed from or more layers.

A variety of unsaturated polyester resins may be employed in the disclosed gel coat compositions. Representative unsaturated polyester resins are described in U.S. Patent Nos. 4,742;121, 5,567,767, 5,571,863, 5,688,867, 5,777,053, 5,874,503 and 6,063,864 and in PCT Published Application Nos. WO 94/07674 A1, WO 00/23495 A1 and WO 03/101918A2. The polyester resin may be prepared from the condensation of one or more carboxylic acids (such as mono, di- or poly-functional unsaturated or saturated carboxylic acids) or their derivatives (such as acid anhydrides, C₁₋₈ alkyl esters, etc.) with one or more alcohols (including mono-functional, di-functional and poly-functional alcohols). The carboxylic acid or derivative may for example be a mixture of an unsaturated carboxylic acid or derivative and a saturated carboxylic acid or derivative. The unsaturated carboxylic acids or their derivatives may for example have about 3 to about 12, about 3 to about 8, or about 4 to about 6 carbon atoms. Representative unsaturated carboxylic acids and their derivatives include maleic acid, fumaric acid, chloromaleic acid, itaconic acid, citraconic acid, methylene glutaric acid, mesaconic acid, acrylic acid, methacrylic acid, and esters or anhydrides thereof. Representative unsaturated carboxylic acids and their derivatives include maleic, fumaric acids, fumaric esters and anhydrides thereof. An unsaturated carboxylic acid or its derivative may for example be present in an amount from about 20 to about 90 mole percent, about 35 to about 75 mole percent, or about 50 to about 65 mole percent of the acids or acid derivatives used to make the unsaturated polyester resin. The saturated carboxylic acids and their derivatives may for example have from about 8 to about 18, about 8 to about 15, or about 8 to about 12 carbon atoms. Representative saturated carboxylic acids and their derivatives may be aromatic, aliphatic or a combination thereof, and include succinic acid, glutaric acid, d-methylglutaric acid, adipic acid, sebacic acid, pimelic acid, phthalic anhydride, o-phthalic acid, isophthalic acid, terephthalic acid, dihydrophthalic acid, tetrahydrophthalic acid, hexahydrophthalic acid or anhydride, tetrachlorophthalic acid, chlorendic acid or anhydride, dodecanedicarboxylic acids, nadic anhydride, cis-5-norbornene-2,3-dicarboxylic acid or anhydride, dimethyl-2,6-naphthenic dicarboxylate, dimethyl-2,6-naphthenic dicarboxylic acid, naphthenic dicarboxylic acid or anhydride and 1,4-cyclohexane dicarboxylic acid. Other representative carboxylic acids include ethylhexanoic acid, propionic acid, trimellitic acid, benzoic acid, 1,2,4-benzenetricarboxylic acid, 1,2,4,5-benzenetetracarboxylic acid and anhydrides thereof. Representative aromatic saturated carboxylic acids include o-phthalic acid, isophthalic acid and their derivatives. Representative aliphatic saturated carboxylic acids include 1,4-cyclohexane dicarboxylic acid, hexahydrophthalic acid, adipic acid and their derivatives. The saturated carboxylic acids or their derivatives may for example be present in an amount from about 10 to about 80 mole percent, about 25 to about 65 mole percent, or about 35 to about 50 mole percent of the acids or acid derivatives used to make the unsaturated polyester resin. Also an aromatic carboxylic acid may for example be present in an amount from 0 to 100 percent, from 0 to about 50 percent, or from 0 to about 25 percent of the saturated acids or acid derivatives used to make the unsaturated polyester resin, and an aliphatic carboxylic acid may for example be present in an amount from 0 to 100 percent, from about 50 to 100 percent, or from about 75 to 100 percent of the saturated acids or acid derivatives used to make the unsaturated polyester resin.

Representative alcohols for use in making the unsaturated polyester resins include alkanediols and oxa-alkanediols such as ethylene glycol, 1,2-propylene glycol, propane-3-diol, 1,3-butylene glycol, butene-1,4-diol, hexane-1,6-diol, diethylene glycol, triethylene glycol, polyethylene glycol, cyclohexane- 1,2-diol, 2,2-bis-(p-hydroxycyclohexyl)-propane, 5-norbornene-2,2-dimethylol, 2,3-norbornene diol, cyclohexane dimethanol, and the like. Alcohols having a neo-structure such as 1,2-propanediol, 2-methyl 1,3-propanediol, 2,2-dimethyl heptanediol, 2,2-dimethyl octanediol, 2,2-dimethyl-1,3-propanediol (neopentyl glycol), pentaerythritol, dipentaerythritol, tripentaerythritol, trimethylol propane, di-trimethylol propane, 2,2,4-trimethyl-1,3-pentanediol, 2-butyl-2-ethyl-1,3-propanediol, 3-hydroxy-2,2-dimethylpropyl 3-hydroxy-2,2-dimethyl propanate, and the like may be preferred. Monofunctional alcohols may also be used to prepare the unsaturated polyester resin. Representative monofunctional alcohols include benzyl alcohol, cyclohexanol, 2-ethylhexyl alcohol, 2-cyclohexyl ethanol, 2,2-dimethyl-1-propanol and lauryl alcohol. Where a monofunctional alcohol is used, the amount may for example be less than about 10 mole percent, or less than about 5 mole percent of the alcohols used to make the unsaturated polyester resin.

The unsaturated polyester resin may be prepared by esterification techniques that will be familiar to those skilled in the art, for example by using catalysts (e.g., esterification or transesterification catalysts) that will likewise be familiar to those skilled in the art. The esterification process is typically carried out until the polyester attains an acid number corresponding to the desired molecular weight. For example, the final acid number may be from about 7 to about 30, the number average molecular weight (Mₙ) may be from about 800 to about 3600, and the weight average molecular weight (M_{w}) may be from about 1,300 to about 11,000. The acid number may be reduced by increasing the reaction temperature, carrying out the reaction for a longer period of time, or by adding an acid neutralizer as will be familiar to those skilled in the art.

The unsaturated polyester resin may also be formed by reacting an oligoester having a weight average molecular weight of about 200 to about 4000 with a diisocyanate and a hydroxyalkyl (meth)acrylate to provide a urethane acrylate having terminal vinyl groups, as described in the above-mentioned U.S. Patent Application Serial No. 10/521,225. The urethane acrylate resin may be used as is, or in a mixture with another unsaturated polyester resin such as an aliphatic or aromatic unsaturated polyester resin.

The unsaturated polyester resin may for example represent about 25 to about 94 wt. %, about 30 to about 89 wt. %, or about 40 to about 79 wt. % of the gel coat composition.

Representative reactive diluents include vinylbenzene (styrene monomer), methyl methacrylate (MMA), and non-hazardous air pollutant (non-HAPs) reactive diluents such as substituted styrenes (e.g., vinyltoluene, para-tertiary-butylstyrene, para-methylstyrene or divinylbenzene); mono-, di-, and poly-functional esters of unsaturated monofunctional acids (such as acrylic acid and methacrylic acid) with alcohols or polyols having from 1 to about 18 carbon atoms; and mono-, di-, and poly-functional esters of unsaturated monofunctional alcohols with carboxylic acids or their derivatives having from 1 to about 18 carbon atoms. Other suitable reactive diluents include, for example, acrylates, methacrylates, phthalates such as diallyl phthalate; triallylcyanurates; vinyl ethers; and the like. Representative acrylates and methacrylates include butanediol dimethacrylate, trimethylolpropane trimethacrylate, ethylene dimethacrylate (EGDMA), polyethylene glycol dimethacrylate (PEGDMA), polypropylene glycol dimethacrylate (PPGDMA), trimethylol propane trimethacrylate (TMPTMA), tetramethylol propane trimethacrylate, dipropylene glycol dimethacrylate, isodecyl methacrylate: 1,3-butylene glycol dimethacrylate, 2-hydroxy ethyl methacrylate (2-HEMA), 1,6 hexane diol dimethacrylate (HDODMA), trieththylene glycol dimethacrylate (TEGDMA), acetoacetoxyethyl methacrylate (AAEM) and the acrylate counterparts thereof. Mixtures of reactive diluents may be used. Preferred reactive diluents include styrene, methyl methacrylate, vinyltoluene, para-tertiary-butylstyrene, para-methylstyrene, EGDMA, 2-HEMA and mixtures thereof. The reactive diluent may for example represent about 5 to about 50 wt. %, about 10 to about 45 wt. %, or about 20 to about 35 wt. % of the gel coat composition.

Representative thixotropic agents for use in the disclosed gel coat compositions include materials such as fumed silica, precipitated silica or hydrophobic silica which when added to the gel coat composition will change the slope of its rheology curve without undesirably degrading the properties of the cured gel coat composition. The thixotropic agent typically is used in an amount of about 0.5 to about 5 wt. %, or about 0.5 to about 2.5 wt. % of the gel coat composition.

Representative promoters for use in the disclosed gel coat compositions are electron donating species that help in the decomposition of an initiator or catalyst and facilitate or speed curing of the gel coat composition at relatively low temperatures, e.g., at temperatures of about 0 to about 30 °C. Representative promoters include metal compounds (e.g., cobalt, manganese, potassium, iron, vanadium, copper, and aluminum salts of organic acids); amines (e.g., dimethylaniline, diethylaniline, phenyl diethanolamine, dimethyl paratoluidine, and 2-aminopyridine); Lewis acids (e.g., boron fluoride dihydrate and ferric chloride); bases (e.g., tetramethyl ammonium hydroxide); quaternary ammonium salts (e.g., trimethyl benzyl ammonium chloride and tetrakismethylol phosphonium chloride); sulfur compounds (e.g., dodecyl mercaptan and 2-mercaptoethanol); dimethyl acetoacetamide; ethyl acetoacetate; methyl acetoacetate and mixtures thereof. For example, cobalt salts of organic acids may be used to facilitate the low temperature decomposition of peroxide catalysts and cure of the disclosed gel coat compositions. Preferred promoters include cobalt octanoate, potassium octanoate, dimethyl acetoacetamide, ethyl acetoacetate, methyl acetoacetate and mixtures thereof. The promoters typically are used in an amount of about 0.05 to about 3 wt. %, or about 0.05 to about 2 wt. % of the gel coat composition.

Representative inhibitors help prolong or maintain shelf life for the uncured gel coat composition, and include free-radical inhibitors or scavengers such as quinones (e.g., hydroquinone (HQ), toluhydroquinone (THQ), mono-tertiary-butyl hydroquinone (MTBHQ), di tertiary-butyl hydroquinone (DTBHQ), napthaquinone (NQ), and monomethyl ether hydroquinone (MEHQ)), butylated hydroxy toluene (BHT), tertiary butyl catechol (TBC), and the like. The inhibitor amount may for example be from about 0.01 to about 0.5 wt. %, from about 0.01 to about 0.3 wt. %, or from about 0.01 to about 0.1 wt. % of the get coat composition.

Representative pigments impart coloration (including white or black coloration) and opacity to the disclosed gel coat compositions, and usually are obtained in the form of a paste or other dispersion of the dry pigment in a compatible carrier, e.g., at about 15 to about 40 wt. % dry pigment solids based on the dispersion weight. The dispersion may also contain wetting agents, dispersing agents, and inhibitors, in minor amounts. Suitable carrier resins include unsaturated polyester resins, saturated polyester resins, urethane diacrylates, acrylic silicones, or other carriers that will be familiar to those skilled in the art. The pigment dispersion may for example be prepared by adding the pigment and other ingredients to the carrier resin, then mixing in a grinding machine. Representative pigments include treated or untreated organic or inorganic pigments and mixtures thereof, such as titanium dioxide, carbon black, iron oxide black, phthalo blue, phthalo green, quinacridone magenta, LF orange, arylide red, quinacridone red, red oxide, quinacridone violet, LF primrose yellow, yellow oxide and other pigments that will be familiar to those skilled in the art. Suitable pigments are commercially available from a variety of suppliers including Ciba Specialty Chemicals, Sun Chemical, Clariant and Cabot Corp. The pigments are used in an amount sufficient to provide an opaque cured coating at the desired thickness level, e.g., at pigment dispersion weights of about 1 to about 30 wt. %, about 5 to about 25 weight or about 5 to about 20 wt. % of the gel coat composition for an applied wet coating having a desired wet thickness of about 0.05 to about 0.8 mm.

The disclosed gel coat compositions are sufficiently free of water-attackable (e.g., water-accessible and water-susceptible) extender filler so that the cured coating will not exhibit blushing after long-term immersion in water. Typical extender fillers include chopped or milled fiberglass, talc, silicon dioxide, wollastonite, mica, alumina trihydrate, clay, calcium carbonate, magnesium carbonate, barium carbonate, calcium sulfate, magnesium sulfate and barium sulfate. While small amounts of extender filler may be tolerated, preferably no more than about 2 wt. %, and more preferably no more than about 1 wt. % extender filler is employed in the disclosed gel coat composition.

The gel coat composition may include other adjuvants that will be familiar to those skilled in the art, including suppressants, surface tension agents, air release agents, initiators and catalysts. Suppressants may reduce volatile organic emissions, and include materials described in the above-mentioned U.S. Patent No. 5,874,503. When employed, the suppressant amount may for example be up to about 2 wt. %, up to about 1.5 wt. %, or from about 0.1 to about 1 wt. % of the gel coat composition.

Surface tension agents may lower surface tension at the surface of the cured gel coat, and include silicones such as dimethyl silicones, liquid condensation products of dimethylsilane diol, methyl hydrogen polysiloxanes, liquid condensation products of methyl hydrogen silane diols, dimethylsilicones, aminopropyltriethoxysilane and methyl hydrogen polysiloxanes, and fluorocarbon surfactants such as fluorinated potassium alkyl carboxylates, fluorinated alkyl quaternary ammonium iodides, ammonium perfluoroalkyl carboxylates, fluorinated alkyl polyoxyethylene ethanols, fluorinated alkyl alkoxylates, fluorinated alkyl esters, and ammonium perfluoroalkyl sulfonates. Representative commercially available surface tension agents include BYK-306™ silicone surfactant (from BYK-Chemie USA, Inc.), DC100 and DC200 silicone surfactants (from Dow Coming Co.), the MODAFLOW™ series of additives (from Solutia, Inc.) and SF-69 and SF-99 silicone surfactants (from GE Silicones Co.). When employed, the surface tension agent amount may for example be up to about 1 wt. %,or from about 0.01 to about 0.5 wt. % of the gel coat composition.

Air release agents may assist in curing the gel coat composition without entrapping air and thereby causing weakness or porosity. Typical air release agents are silicone or non-silicone materials including silicone defoamers, acrylic polymer, hydrophobic solids, and mineral oil based paraffin waxes. Commercially available air release reagents include BYK-066, BYK-077, BYK-500, BYK-501, BYK-515, and BYK-555 defoamers (from BYK-Chemie USA, Inc.). When used, the air release agent amount may for example be up to about 1.5 wt. %, up to about 1 wt. %, or from about 0.1 to about 0.5 wt. % of the gel coat composition.

Initiators or catalysts may be added to the gel coat composition at the time of application to a mold surface or may be latent initiators or catalysts that may be included in the gel coat composition as supplied to the end user and are activated during the application process. Representative initiators or catalysts include free-radical catalysts such as peroxide catalysts (e.g., benzoyl peroxide, methyl ethyl ketone peroxide, cumene hydroperoxide, and the like), azoalkane catalysts and commercially available initiators or catalysts such as DDM9 and DHD9 catalyst (from Atofina), HIGH POINT™ 90 catalyst (from Witco) and CADOX™ 50 catalyst (from Norac Co.). Representative radiation-activated or heat-activated initiators or catalysts include IRGACURE™ 819 initiator (from Ciba Specialty Chemicals) and cumene hydroperoxide. When used, the initiator or catalyst amount may for example be about 0.5 to about 3 wt. %, about 1 to about 2.5 wt. %, or about 1.2 to about and 2 wt. % of the unsaturated polyester resin weight.

The gel coat composition may be.prepared for example by blending the unsaturated polyester resin with the remaining ingredients in any convenient order. If desired, some or all of the reactive diluent may be added at the completion of blending to yield a mixture having a desired viscosity (e.g., a viscosity of about 2,000 to about 10,000 centipoise, about 3,000 to about 8,000 centipoise, or about 3,500 to about 5,000 centipoise as measured using a BROOKFIELD^{™} viscometer from Brookfield Engineering Laboratories and Spindle No. 4 at 25 °C). The promoter amount may be adjusted or inhibitors may be added or adjusted to obtain a gel coat composition having a desired gel and cure time. The gel coat composition may also be prepared by mixing a pigment (e.g., a pigment dispersion) with a conventional clear gel coat composition without also adding a deleterious amount of extender filler.

The gel coat composition may applied to a mold surface in one or more layers and at least partially cured using techniques that will be familiar to those skilled in the art, including the above-mentioned open mold or closed mold processes. The layer or layers of the gel coat composition may each for example have a wet thickness of about 0.05 to about 0.8 mm.

A variety of strengthening plastic support materials may be formed behind the gel coat composition in one or more layers using techniques that will be familiar to those skilled in the art. Representative strengthening plastic support materials include fiber-reinforced plastics (made e.g., using fiberglass cloth or fiberglass roving), carbon fiber composites, reinforced or unreinforced surface molding compounds and other reinforced or unreinforced plastics such as reinforced polyesters or reinforced epoxies. The strengthening plastic support overall thickness before cure may for example be about 5 mm to about 125 mm.

If desired, one or more intervening layers such as a barrier coat, skin coat or print blocker may be applied between the gel coat composition and the strengthening plastic support. Suitable intervening layer materials will be familiar to those skilled in the art, and include vinyl esters, polyesters and epoxy resins. The wet thickness of such intervening layers will also be familiar to those skilled in the art, and may for example be about 0.1 to about 3 mm.

The following examples are offered to aid in understanding the present invention and are not to be construed as limiting the scope thereof. Unless otherwise indicated, all parts and percentages are by weight. The following abbreviations are used in the examples:

| | |
|---|---|
| NPG | neopentyl glycol |
| MA | maleic anhydride |
| DBTDL | dibutyl tin dilaurate |
| HEA | 2-hydroxyethyl acrylate |
| IPDI | isophorone diisocyanate |
| MMA | methyl methacrylate |
| THQ | Toluhydroquinone |
| TMP | Trimethylolpropane |
| HALS | hindered amine light stabilizer |
| DMAA | dimethyl acetoacetamide |

### Example 1

The ingredients shown below in Table 1 were combined and mixed as needed in the order indicated:

**Table 1**

| **Ingredient** | **Parts** |
|---|---|
| AROPOL™ Q 6371 NPG resin (from Ashland Specialty Chemical) | 36.91 |
| BYK-A 555 air release agent (from BYK-Chemie USA, Inc.) | 0.51 |
| THQ inhibitor solution | 0.25 |
| AEROSIL™ 200 fumed silica thixotrope (from Degussa Corporation) | 1.13 |
| SIPERNAT™ 22LS precipitated silica thixotrope (from Degussa Corporation) | 0.86 |
| AROPOL Q 6371 NPG resin | 17.63 |
| Styrene monomer | 14.81 |
| TINUVIN™ 123 UV light stabilizer (bis-(1-octyloxy-2,2,6-tetramethyl-4- | |
| piperidyl) sebacate HALS from Ciba Specialty Chemicals Inc.) | 0.52 |
| COBALT 12% SYN NUXTRA™ promoter (from the OM Group) | 0.19 |
| 21% COBALT HYDROXY TEN-CEM™ promoter (from the OM Group) | 0.04 |
| POTASSIUM HEX-CEM™ 977 promoter (from the OM Group) | 0.15 |
| DMAA promoter (from Eastman Chemical Co.) | 0.23 |
| BYK-A 555 air release agent | 0.51 |
| Methyl methacrylate | 8.20 |
| SR-206 ethylene glycol dimethacrylate (from Sartomer Co.) | 2.95 |
| Silicone defoamer | 0.10 |
| Blue pigment paste made from 10 % phthalo blue in unsaturated polyester resin | 13.70 |
| Burgundy pigment paste made from 12 % quinacridone violet in unsaturated | |
| polyester resin | 1.11 |
| Black pigment paste made from 4 % carbon black in unsaturated polyester resin | 0.13 |
| White pigment paste made from 50 % titanium dioxide in unsaturated polyester | |
| resin | 0.08 |
| Total | 100.00 |

The resulting mixture was sprayed onto a glass mold at a wet coating thickness sufficient to provide a 0.5 mm thick cured coating, allowed to cure at room temperature, covered with a 3 ply fiberglass-reinforced polyester layer approximately 6 mm thick made from a 42.5 g (1 1/2 oz.) chopped strand mat and EASTMAN™ 733-8650-18 polyester laminating resin (from Eastman Chemical Co.) and allowed to cure at room temperature. The cured panel had an opaque dark blue color.

The resulting laminate was demolded and cut to form two 75 mm X 75 mm test panels. One of the panels was set aside as a control and the other panel was subjected to an accelerated water immersion test by placing in on edge in a beaker filled with sufficient water so that the waterline was 50 mm above the panel. Using a hot plate, the water was heated to 66° C for 6 hours. The hot plate was switched off and the water was allowed to cool for 16 hours to 25° C. The panel was removed from the water and placed (without wiping it dry) on a cotton towel to air dry for 24 hours at 25°C. The panel was then compared to the control. No difference in color was observed under normal indoor illumination. When this test was repeated using panels made using gel coat compositions containing typical quantities of talc or clay extender fillers, significant blushing was observed.

### Urethane Acrylate Resin Example A

NPG (101.64 parts), MA (60.59 parts), and DBTDL (0.42 parts) were added into a flask equipped with a packed column and agitator. The resulting mixture was heated to a maximum of 227°C and reacted to an acid number of about 5-10 under a nitrogen atmosphere by removing water (11.14 parts). To the resulting oligoester (151.65 parts) was added 2,6-di-t-butyl-p-cresol (0.65 parts) and HEA (75.71 parts) at 93°C. IPDI (114.28 parts) was added to the resulting mixture via an addition funnel to maintain the exothermic reaction temperature below 93°C. The reaction was maintained at 93°C for one hour followed by the addition of MMA (107.69 parts) as a solvent and THQ (0.03 parts) as an inhibitor. The resulting product contained 80 % urethane acrylate gel coat resin in 20 % MMA solvent.

### Urethane Acrylate Resin Example B

Using the method of Urethane Acrylate Resin Example A, 1,6-hexanediol (24.76 parts), TMP (0.68 parts) and adipic acid (22.66 parts) were reacted under esterifying conditions to remove water (5.78 parts) and provide a saturated oligoester (40.78 parts) having a 239.1 equivalent weight. The oligoester was then reacted with DBTDL (0.08 parts), 2,6-di-t-butyl-p-cresol (0.13 parts), HEA (13.92 parts) and IPDI (25.3 parts) using the method of Urethane Acrylate Resin Example A and then mixed with MMA (19.79 parts) and THQ (0.006 parts) to provide a urethane polyester copolymer having terminal acrylic unsaturation in MMA solvent.

### Urethane Acrylate Resin Example C

1,6-Hexanediol (94.8 parts) and TMP (2.6 parts) were added into a flask equipped with an agitator, and the mixture was melted. Next, adipic acid (86.8 parts) was added, and the resulting mixture was heated to 227°C, under a nitrogen atmosphere.. An esterification reaction was performed, at a maximum temperature of 238°C, until the acid number was less than 10, preferably less than 7. Water (21.1 parts) was removed during the reaction. The resulting oligoester was cooled to 60°C using a one part air sparge and 2 part nitrogen blanket. Next, DBTDL (0.31 parts), 2.6-di-t-butyl-p-cresol (0.53 parts), HEA (55.7 parts), and IPDI (101.2 parts) were added to the oligoester. The IPDI was added at a rate such that the exothermic reaction was maintained below 93°C (e.g., over about 30-60 minutes). The reaction was continued for 2 to 3 hours, periodically testing for free isocyanate groups (% NCO). A % NCO of less than 0.3 is preferred. At the completion of the reaction, THQ (0.03 parts) and MMA, (79.2 parts) were added slowly to the urethane acrylate gel coat resin at a temperature below 88°C. The resulting mixture was stirred at 60°C for at least one hour. The resulting product contained 80% urethane acrylate gel coat resin and 20% MMA solvent. Several recommended gel coat compositions that could be made from Urethane Acrylate Resin Example A, Urethane Acrylate Resin Example B or Urethane Acrylate Resin Example C are shown below in Table 2, Table 3 and Table 4.

**Table 2**

| **Dark Color Gel Coat Composition** | |
|---|---|
| **Ingredient** | **Parts** |
| Urethane acrylate gel coat resin (80% in MMA) | 38-50 |
| Styrene | 0-5 |
| Air release agent | 0.1-1 |
| Thixotrope | 0.5-3 |
| Additional reactive monomer | 20-35 |
| Cobalt | 0.1-.5 |
| Cobalt promoter | 0.2-.7 |
| UV inhibitor | 0.2-.5 |
| HALS | 0.2-1 |
| Glycol | 0.1-1.5 |
| Pigment paste | 10-25 |

**Table 3**

| **Blue Gel Coat Composition** | |
|---|---|
| **Ingredient** | **Parts** |
| Urethane Acrylate Resin Example B | 42 |
| Styrene | 4 |
| BYK-A 555 air release agent | 1 |
| AEROSIL 200 thixotrope | 2 |
| Grind to 6 on Hegmann gauge | |
| SR 9021 propoxylated (5.5) glyceryl triacrylate (from Sartomer Co.) | 10 |
| SR-206 ethylene glycol dimethacrylate | 1 |
| Methyl methacrylate | 19 |
| Cobalt octoate (12%) in mineral spirits and dipropylene glycol monomethyl ether | 0.5 |
| DMAA | 0.0001 |
| TINUVIN 928 initiator (2-(2H-benzotriazol-2-yl)-6-(1-methyl-1-phenylethyl-4-(1,1,3,3-tetramethylbutyl)phenol from Ciba Specialty Chemicals Inc.) | 0.5 |
| TINUVIN 123 UV light stabilizer | 1 |
| 2-hydroxyethyl methacrylate | 1 |
| Blend 10 minutes | |
| Blue pigment paste | 17 |
| White pigment paste | 1 |
| **Total** | 100 |

**Table 4**

| **White Gel coat Composition** | |
|---|---|
| **Ingredient** | **Parts** |
| Urethane acrylate gel coat resin of Example 2 | 24.6149 |
| Styrene monomer | 4 |
| BYK-A 555 air release agent | 1 |
| AEROSIL 200 thixotrope | 0.5 |
| Grind to 6 on Hegmann Gauge | |
| SR-9021 propoxylated (5.5) glyceryl triacrylate | 7 |
| SR-206 ethylene, glycol dimethacrylate | 1 |
| Methyl methacrylate | 17.175 |
| cobalt octoate (12%) in mineral spirits and dipropylene glycol monomethyl ether | 0.2 |
| DMAA | 0.0001 |
| TINUVIN 928 initiator | 0.5 |
| TINUVIN 123 UV light stabilizer | 1 |
| 2-Hydroxyethyl methacrylate | 1 |
| Blend 10 minutes | |
| Blue pigment paste | 0.01 |
| White pigment paste | 42 |
| **Total** | 100 |

The disclosed method and gel coat compositions have particular utility in the manufacture of large watercraft whose length at the waterline is about 9 meters or more, as such large watercraft generally are not trailerable and thus may be subjected to long-term water immersion. The disclosed method and gel coat compositions may be used to form a variety of watercraft components including hulls, bulkheads, decks, cowlings and stanchions.

Various modifications and alterations of this invention will be apparent to those skilled in the art without departing from the scope and spirit of this invention. It should be understood that this invention is not limited to the illustrative embodiments set forth above.

## Claims

1. A method for watercraft manufacture comprising:
a) applying to a watercraft mold surface a colored gel coat composition comprising an unsaturated polyester resin, reactive diluent, and sufficient pigment to provide an opaque cured coating, the composition being sufficiently free of extender filler so that the cured coating will not exhibit blushing after 6 hours immersion in 66° C water,
b) at least partially curing the gel coat composition,
c) forming a strengthening plastic' support behind the partially or fully cured gel coat composition,
d) curing the strengthening plastic support, and
e) demolding the resulting cured laminate.

2. A method according to claim 1 comprising applying the gel coat composition at a wet thickness of 0.05 to 0.8 mm and forming the strengthening plastic support at a thickness before curing of 5 mm to 125 mm.

3. A method according to claim 1 wherein the strengthening plastic support comprises a fiber-reinforced plastic, carbon fiber composite, reinforced or unreinforced surface molding compound, reinforced polyester or reinforced epoxy.

4. A method according to claim 1 comprising applying a barrier coat, skin coat or print blocker layer between the gel coat composition and the strengthening plastic support.

5. A colored gel coat composition comprising an unsaturated polyester resin, reactive diluent, thixotropic agent, promoter, and sufficient pigment to provide an opaque cured coating, the composition being sufficiently free of extender filler so that the cured coating will not exhibit blushing after 6 hours immersion in 66° C water.

6. The method according to claim 1 or the composition according to claim 5 wherein the unsaturated polyester resin has a weight average molecular weight of 1,300 to 11,000.

7. The method according to claim 1 or the composition according to claim 5 wherein the unsaturated polyester resin comprises a mixture of an aliphatic or aromatic unsaturated polyester resin with a urethane acrylate oligoester having terminal vinyl groups.

8. The method according to claim 1 or the composition according to claim 5 wherein the reactive diluent comprises styrene, methyl methacrylate, vinyltoluene, para-tertiary-butylstyrene, para-methylstyrene, ethylene dimethacrylate, 2-hydroxy ethyl methacrylate or mixture thereof.

9. The method according to claim 1 or the composition according to claim 5 wherein the reactive diluent comprises an acrylate, methacrylate, phthalate, triallylcyanurate, vinyl ether or mixture thereof.

10. The method according to claim 1 or the composition according to claim 5 wherein the pigment comprises an inorganic pigment.

11. The method according to claim 1 or the composition according to claim 5 wherein the pigment comprises an organic pigment.

12. The composition according to claim 5 wherein the promoter comprises cobalt octanoate, potassium octanoate, dimethyl acetoacetamide, ethyl acetoacetate, methyl acetoacetate or mixture thereof.

13. The composition according to claim 5 further comprising an initiator or catalyst.

14. The method according to claim 1 or the composition of claim 5 wherein the gel coat composition comprises 25 to 94 wt. % unsaturated polyester resin, 5 to 50 wt. % reactive diluent and 1 to 30 wt. % dispersed pigment

15. The composition according to claim 14 further comprising 0.5 to 5 wt. % thixotropic agent, 0.05 to 3 wt. % promoter and 0.01 to 0.5 wt % inhibitor.

16. The method according to claim 1 or the composition of claim 5 wherein the gel coat composition comprises 40 to 79 wt. % unsaturated polyester resin, 20 to 35 wt. % reactive diluent and 5 to 20 wt. % dispersed pigment.

17. The method according to claim 1 or the composition of claim 5 wherein the gel coat composition comprises no more than 2 wt. % extender filler.

18. The method according to claim 1 or the composition of claim 5 wherein the gel coat composition comprises no more than 1 wt. % extender filler.

19. A watercraft having a hull with an exposed surface comprising a cured composition according to claim 5.

20. A watercraft having a hull with an exposed surface comprising a cured composition according to claim 5 and a length at the waterline of 9 meters or more.

## Patentansprüche

1. Verfahren zur Wasserfahrzeug-Fertigung, umfassend:
a) Aufbringen einer farbigen Gelüberzugszusammensetzung, umfassend ein ungesättigtes Polyesterharz, reaktives Verdünnungsmittel und ausreichend Pigment, um eine opake gehärtete Beschichtung bereitzustellen, auf die Oberfläche eines Wasserfahrzeug-Formteils, wobei die Zusammensetzung ausreichend frei von Extenderfüllstoff ist, so dass die gehärtete Beschichtung nach 6-stündigem Eintauchen in Wasser mit 66°C keine Schleierbildung zeigt,
b) zumindest teilweises Härten der Gelüberzugszusammensetzung,
c) Ausbilden eines verstärkenden Kunststoffträgers hinter der teilweise oder vollständig gehärteten Gelüberzugszusammensetzung,
d) Härten des verstärkenden Kunststoffträgers und
e) Lösen der Form von dem resultierenden gehärteten Laminat.

2. Verfahren nach Anspruch 1, umfassend das Aufbringen der Gelüberzugszusammensetzung bei einer Nassdicke von 0,05 bis 0,8 mm und Ausbilden des verstärkenden Kunststoffträgers in einer Dicke vor dem Härten von 5 mm bis 125 mm.

3. Verfahren nach Anspruch 1, wobei der verstärkende Kunststoffträger einen faserverstärkten Kunststoff, einen Kohlenstofffaser-Verbundstoff, eine verstärkte oder unverstärkte Oberflächenformgebungs-Verbindung, verstärkten Polyester oder verstärktes Epoxyharz umfasst.

4. Verfahren nach Anspruch 1, umfassend das Aufbringen einer Sperrschicht, einer Oberflächenschicht oder einer Druckblockadeschicht zwischen der Gelüberzugszusammensetzung und dem verstärkenden Kunststoffträger.

5. Farbige Gelüberzugszusammensetzung, umfassend ein ungesättigtes Polyesterharz, reaktives Verdünnungsmittel, thixotropes Mittel, Promotor und ausreichend Pigment, um eine opake gehärtete Beschichtung bereitzustellen, wobei die Zusammensetzung ausreichend frei von Extenderfüllstoff ist, so dass der gehärtete Überzug nach 6-stündigem Eintauchen in Wasser mit 66°C keine Schleierbildung zeigt.

6. Verfahren nach Anspruch 1 oder Zusammensetzung nach Anspruch 5, wobei das ungesättigte Polyesterharz ein Gewichtsmittel des Molekulargewichts von 1.300 bis 11.000 aufweist.

7. Verfahren nach Anspruch 1 oder Zusammensetzung nach Anspruch 5, wobei das ungesättigte Polyesterharz ein Gemisch eines aliphatischen oder aromatischen ungesättigten Polyesterharzes mit einem Urethanacrylat-Oligoester mit endständigen Vinylgruppen umfasst.

8. Verfahren nach Anspruch 1 oder Zusammensetzung nach Anspruch 5, wobei das reaktive Verdünnungsmittel Styrol, Methylmethacrylat, Vinyltoluol, para-tert-Butylstyrol, para-Methylstyrol, Ethylendimethacrylat, 2-Hydroxyethylmethacrylat oder ein Gemisch davon umfasst.

9. Verfahren nach Anspruch 1 oder Zusammensetzung nach Anspruch 5, wobei das reaktive Verdünnungsmittel ein Acrylat, Methacrylat, Phthalat, Triallylcyanurat, einen Vinylether oder ein Gemisch davon umfasst.

10. Verfahren nach Anspruch 1 oder Zusammensetzung nach Anspruch 5, wobei das Pigment ein anorganisches Pigment umfasst.

11. Verfahren nach Anspruch 1 oder Zusammensetzung nach Anspruch 5, wobei das Pigment ein organisches Pigment umfasst.

12. Zusammensetzung nach Anspruch 5, wobei der Promotor Cobaltoctanoat, Kaliumoctanoat, Dimethylacetoacetamid, Ethylacetoacetat, Methylacetoacetat oder ein Gemisch davon umfasst.

13. Zusammensetzung nach Anspruch 5, weiter umfassend einen Initiator oder Katalysator.

14. Verfahren nach Anspruch 1 oder Zusammensetzung nach Anspruch 5, wobei die Gelüberzugszusammensetzung 25 bis 94 Gew.-% ungesättigtes Polyesterharz, 5 bis 50 Gew.-% reaktives Verdünnungsmittel und 1 bis 30 Gew.-% dispergiertes Pigment umfasst.

15. Zusammensetzung nach Anspruch 14, weiter umfassend 0,5 bis 5 Gew.-% thixotropes Mittel, 0,05 bis 3 Gew.-% Promotor und 0,01 bis 0,5 Gew.-% Inhibitor.

16. Verfahren nach Anspruch 1 oder Zusammensetzung nach Anspruch 5, wobei die Gelüberzugszusammensetzung 40 bis 79 Gew.-% ungesättigtes Polyesterharz, 20 bis 35 Gew.-% reaktives Verdünnungsmittel und 5 bis 20 Gew.-% dispergiertes Pigment umfasst.

17. Verfahren nach Anspruch 1 oder Zusammensetzung nach Anspruch 5, wobei die Gelüberzugszusammensetzung nicht mehr als 2 Gew.-% Extenderfüllstoff umfasst.

18. Verfahren nach Anspruch 1 oder Zusammensetzung nach Anspruch 5, wobei die Gelüberzugszusammensetzung nicht mehr als 1 Gew.-% Extenderfüllstoff umfasst.

19. Wasserfahrzeug mit einem Rumpf mit einer freiliegenden Oberfläche, welche eine gehärtete Zusammensetzung nach Anspruch 5 umfasst.

20. Wasserfahrzeug mit einem Rumpf mit einer freiliegenden Oberfläche, welche eine gehärtete Zusammensetzung nach Anspruch 5 und eine Länge an der Wasserlinie von 9 Metern oder mehr umfasst.

## Revendications

1. Procédé de fabrication de bateau comprenant les étapes consistant à :
a) appliquer à une surface de moule de bateau une composition de revêtement de gel coloré comprenant une résine de poly(ester) insaturée, un diluant réactif et un pigment suffisant pour fournir un revêtement traité opaque, la composition étant suffisamment exempte de matière de charge de sorte que le revêtement traité ne présentera pas de voilage après 6 heures d'immersion dans une eau à 66 °C,
b) traiter au moins partiellement la composition de revêtement de gel,
c) former un élément de consolidation en plastique derrière la composition de revêtement de gel partiellement ou complètement traitée,
d) traiter l'élément de consolidation en plastique, et
e) démouler le stratifié traité résultant.

2. Procédé selon la revendication 1, comprenant l'application de la composition de revêtement de gel à une épaisseur humide de 0,05 à 0,8 mm et la formation de l'élément de consolidation en plastique à une épaisseur avant traitement de 5 mm à 125 mm.

3. Procédé selon la revendication 1, dans lequel l'élément de consolidation en plastique comprend une matière plastique renforcée de fibres, un composite de fibre de carbone, un composé de moulage de surface renforcé ou non renforcé, du poly(ester) renforcé ou de l'époxy renforcé.

4. Procédé selon la revendication 1, comprenant l'application d'un revêtement barrière, d'un revêtement externe ou d'une couche de blocage d'impression entre la composition de revêtement de gel et l'élément de consolidation en plastique.

5. Composition de revêtement de gel coloré comprenant une résine de poly(ester) insaturée, un diluant réactif, un agent thixotrope, un promoteur et un pigment suffisant pour fournir un revêtement traité opaque, la composition étant suffisamment exempte de matière de charge de sorte que le revêtement traité ne présentera pas de voilage après 6 heures d'immersion dans une eau à 66°C.

6. Procédé selon la revendication 1 ou composition selon la revendication 5, dans lequel la résine de poly(ester), insaturée a une masse moléculaire moyenne en masse de 1 300 à 11 000.

7. Procédé selon la revendication 1 ou composition selon la revendication 5, dans lequel la résine de poly(ester) insaturée comprend un mélange d'une résine de poly(ester) insaturée aliphatique ou aromatique avec un oligoester d'acrylate d'uréthane ayant des groupes vinyle terminaux.

8. Procédé selon la revendication 1 ou composition selon la revendication 5, dans lequel le diluant réactif comprend le styrène, le méthacrylate de méthyle, le vinyltoluène, le butylstyrène para-tertiaire, le para-méthylstyrène, le diméthacrylate d'éthylène, le méthacrylate de 2-hydroxyéthyle ou un mélange de ceux-ci.

9. Procédé selon la revendication 1 ou composition selon la revendication 5, dans lequel le diluant réactif comprend un acrylate, un méthacrylate, un phtalate, un cyanurate de triallyle, un vinyl éther ou un mélange de ceux-ci.

10. Procédé selon la revendication 1 ou composition selon la revendication 5, dans lequel le pigment comprend un pigment inorganique.

11. Procédé selon la revendication 1 ou composition selon la revendication 5, dans lequel le pigment comprend un pigment organique.

12. Composition selon la revendication 5, dans laquelle le promoteur comprend l'octanoate de cobalt, l'octanoate de potassium, le diméthylacétoacétamide, l'acétoacétate d'éthyle, l'acétoacétate de méthyle ou un mélange de ceux-ci.

13. Composition selon la revendication 5, comprenant en outre un initiateur ou un catalyseur.

14. Procédé selon la revendication 1 ou composition selon la revendication 5, dans lequel la composition de revêtement de gel comprend 25 à 94 % en poids de résine de poly(ester) insaturée, 5 à 50 % en poids de diluant réactif et 1 à 30 % en poids de pigment dispersé.

15. Composition selon la revendication 14, comprenant en outre 0,5 à 5 % en poids d'agent thixotrope, 0,05 à 3 % en poids de promoteur et 0,01 à 0,5 % en poids d'inhibiteur.

16. Procédé selon la revendication 1 ou composition selon la revendication 5, dans lequel la composition de revêtement de gel comprend 40 à 79 % en poids de résine de poly(ester) insaturée, 20 à 35 % en poids de diluant réactif et 5 à 20 % en poids de pigment dispersé.

17. Procédé selon la revendication 1 ou composition selon la revendication 5, dans lequel la composition de revêtement de gel ne comprend pas plus de 2 % en poids de matière de charge.

18. Procédé selon la revendication 1 ou composition selon la revendication 5, dans lequel la composition de revêtement de gel ne comprend pas plus de 1 % en poids de matière de charge.

19. Bateau comportant une coque avec une surface exposée comprenant une composition traitée selon la revendication 5.

20. Bateau comportant une coque avec une surface exposée comprenant une composition traitée selon la revendication 5 et une longueur au niveau de la ligne de flottaison de 9 mètres ou plus.
